# EUROPEAN PATENT SPECIFICATION

(11) **EP 2 666 607 B1**
(45) Date of publication and mention of the grant of the patent: **14.03.2018**
(21) Application number: 12736308.3
(22) Date of filing: 17.01.2012
(51) Int. Cl.: B29D 30/06, B29L 22/00, C08K 3/04, C08K 5/17, C08K 5/3445, C08L 33/06

(54) **TIRE BLADDER**
REIFENBLASE
VESSIE DE PNEU

(30) Priority: 17.01.2011 JP 2011006707
(43) Date of publication of application: 27.11.2013
(73) Proprietor: Denka Company Limited, Tokyo 103-8338 (JP)
(72) Inventor: IKARI, Satoru, Itoigawa-city Niigata 949-0393 (JP); ABE, Yasushi, Itoigawa-city Niigata 949-0393 (JP); HAGIWARA, Shogo, Itoigawa-city Niigata 949-0393 (JP)
(74) Representative: Gulde & Partner
(86) International application number: PCT/JP2012/050850
(87) International publication number: WO 2012/099117

(56) References cited:
- EP-A1- 2 159 264
- EP-A2- 1 201 704
- WO-A1-2008/143300
- JP-A- 7 314 573
- JP-A- 2002 080 677
- JP-A- 2004 351 911
- JP-A- 2004 351 911
- JP-A- 2005 120 124
- ANONYMOUS: "PHYSICOCHEMICAL PROPERTIES - CARBON BLACK - TOKAI CARBON CO", INTERNET CITATION, 1 January 2009 (2009-01-01), pages 1-3, XP002521806, Retrieved from the Internet: URL:http://www.tokaicarbon.co.jp/en/produc ts/carbon_b/seast/index.html [retrieved on 2009-03-31]

## Description

### Technical Field

The present invention relates to a tire bladder. More specifically, it relates to a tire bladder of an acrylic rubber composition, which shows an improved elongation at break in high-temperature tensile test.

### Background Art

Rubber tires for automobiles, motorcycles, bicycles and others have been produced by expanding the bladder from inside the tire with internal fluid, pressing the unvulcanized raw tire to a mold, and thus allowing vulcanization. The raw tire obtains their tire tread patterns and side-wall shapes by the expansion of bladder described above. Generally, the bladder is expanded with a hot gas such as steam. After vulcanization, the mold is removed and the internal pressure released, making the bladder shrink and the tire is separated from the mold for tire production. Use of the tire bladders is well known in the art.

Technologies for production of tires that are superior in physical and chemical properties such as mechanical properties and steam resistance and also in durability and release characteristics and have favorable processability are known as tire bladder technologies (see, for example, Patent Documents JP H05-31724 A and JP 2009-112893 A). Generally, butyl rubbers have been used frequently as the rubbers for use in bladders used for tire molding and vulcanization.

JP 2004-351911 A discloses a bladder for tire curing comprising an acrylic rubber composition comprising an ethylene acrylic rubber blended with carbon, silica and a vulcanizing agent. EP 2 159 264 A1 relates to an acrylic rubber composition for rubber hoses, sealing components such as gaskets or packings, or vibration-insulating rubber components. The acrylic rubber composition comprises a carboxyl group-containing acrylic rubber, carbon black, at least one primary antioxidant, at least one secondary antioxidant, and 2,2-bis[4-(4-amino-phenoxy)phenyl]propane as a vulcanizing agent.

### Summary of Invention

### Technical Problem

However, conventional tire bladders had problems such as insufficient heat resistance and short product life cycle.

Accordingly, a major object of the present invention is to provide a tire bladder improved in heat resistance and having a longer product life cycle.

### Solution to Problem

After intensive studies, the inventors have found that it is possible to improve the heat resistance of a tire bladder and elongate the lifetime of the product by using an acrylic rubber composition superior in processing safety and mechanical properties and exhibiting higher elongation in a high-temperature atmosphere for the tire bladder, and made the present invention.

Specifically, the tire bladder according to the present invention is made of an acrylic rubber composition at least containing: 100 parts by mass of an acrylic rubber containing 94.5 to 99.5 mass % of an alkyl (meth)acrylate-derived structural unit and
0.5 to 3 mass % of a monoalkyl maleate and/or monoalkoxyalkyl maleate-derived structural unit; 30 to 200 parts by mass of a carbon black having an arithmetic average particle diameter, as determined by JIS-Z8901, of 20 to 30 nm and a DBP oil absorption of 70 to 130 ml/100 g; and 0.1 to 5 parts by mass of an imidazole compound as antioxidant; and 0.1 to 10 parts by mass of a vulcanizing agent, wherein the vulcanizing agent is a polyamine compound which is at least one compound selected from bis[4-(4-aminophenoxy)phenyl]sulfone, bis[4-(3-amino-phenoxy)phenyl]sulfone, 9,9-bis(4-aminophenyl)fluorene, and 4,4'-bis(4-aminophenoxy)biphenyl.

Because the acrylic rubber composition according to the present invention shows higher retention rate of its elongation during heated aging test, it is superior in processing safety and mechanical properties and additionally exhibiting high elongation in a high-temperature atmosphere.

The antioxidant is for example, at least one compound selected from 2-mercaptobenzimidazole, 2-mercaptomethylbenzimidazole, and 4,5-mercaptomethylbenzimidazole.

The acrylic rubber may contain additionally an ethylene-derived structural unit in an amount of 2.5 mass % or less.

In addition, the tire bladder may contain a guanidine compound as vulcanization accelerator in an amount of 0.1 to 5 parts by mass with respect to 100 parts by mass of the acrylic rubber.

Further, the tire bladder may contain at least one an antioxidant selected from amine-, phosphorus-, and sulfur-based antioxidants in an amount of 0.1 to 10 parts by mass with respect to 100 parts by mass of the acrylic rubber.

For example, the amine-based antioxidant is 4,4'-α,α-dimethylbenzyldiphenylamine, the phosphorus-based antioxidant is tris(nonylphenyl) phosphite or triisodecyl phosphite, and the sulfur-based antioxidant is dilauryl thiodipropionate.

The monoalkyl maleate- and/or monoalkoxyalkyl maleate-derived structural unit may be at least one compound selected from monoethyl maleate, monobutyl maleate, monocyclohexyl maleate, monoethoxyethyl maleate, and monomethoxybutyl maleate.

The alkyl acrylate unit may comprise methyl acrylate or ethyl acrylate in an amount of 50 to 100 mass % and n-butyl acrylate in an amount of 0 to 50 mass %.

### Advantageous Effects of Invention

The present invention provides a tire bladder that is improved in heat resistance and thus can elongate the life cycle of the products.

### Description of Embodiments

Hereinafter, favorable embodiments of the present invention will be described. The following embodiments are only typical examples of the present invention and thus it should be understood that the scope of the present invention is not restricted thereby but is defined by the claims.

### <Explanation of term>

In the description below, a term "A to B" means a range of A "or more" and B "or less."

### <Acrylic rubber composition>

The tire bladder in an embodiment of the present invention is made of an acrylic rubber composition comprising: 100 parts by mass of an acrylic rubber containing 94.5 to 99.5 mass % of an alkyl (meth)acrylate-derived structural unit and 0.5 to 3 mass % of a monoalkyl maleate and/or monoalkoxyalkyl maleate-derived structural unit; 30 to 200 parts by mass of a carbon black having an arithmetic average particle diameter, as determined by JIS-Z8901, of 20 to 30 nm and a DBP oil absorption of 70 to 130 ml/100 g; and 0.1 to 5 parts by mass of an imidazole compound as antioxidant; and 0.1 to 10 parts by mass of a polyamine compounds as vulcanizing agent, selected from bis[4-(4-aminophenoxy)phenyl]sulfone, bis[4-(3-aminophenoxy)phenyl]sulfone, 9,9-bis(4-aminophenyl)fluorene, and 4,4'-bis(4-aminophenoxy)biphenyl.

### [Acrylic rubber]

The acrylic rubber is a rubber obtained by copolymerization of an unsaturated monomer such as alkyl (meth)acrylate with a monomer copolymerizable therewith. In particular, the acrylic rubber in the present embodiment contains an alkyl (meth)acrylate-derived structural unit in an amount of 94.5 to 99.5 mass % and a monoalkyl maleate- and/or monoalkoxyalkyl maleate-derived structural unit in an amount of 0.5 to 3 mass %.

### (Alkyl (meth)acrylate)

It is possible by selecting the kind of the alkyl (meth)acrylate adequately to adjust the basic properties, such as physical properties under ambient atmosphere, heat resistance, low-temperature resistance and oil resistance, of the acrylic rubber composition obtained.

Examples of the alkyl (meth)acrylates include, but are not limited to, methyl acrylate, ethyl acrylate, n-propyl acrylate, n-butyl acrylate, isobutyl (meth)acrylate, n-pentyl (meth)acrylate, n-hexyl (meth)acrylate, n-octyl (meth)acrylate, n-decyl (meth)acrylate, 2-ethylhexyl acrylate and the like.

The alkyl (meth)acrylate-derived structural unit is contained in an amount of 94.5 to 99.5 mass %, more preferably, 97 to 99.5 mass %, with respect to 100 mass % of the acrylic rubber. The physical properties of the acrylic rubber may declined at high temperature, when the structural unit is contained in an amount of less than 94.5 mass %. Alternatively when the structural unit is more than 99.5 mass %, the acrylic rubber composition may not crosslink. The structural units described above and below can be determined by nuclear magnetic resonance spectrum.

The alkyl (meth)acrylate-derived structural unit preferably consists of 50 to 100 mass % of methyl acrylate or ethyl acrylate and 0 to 50 mass % of n-butyl acrylate. It is possible to improve the oil resistance of the acrylic rubber very favorably by making methyl acrylate or ethyl acrylate contained in an amount of 50 to 100 mass %. Alternatively, it is possible to improve the low-temperature resistance thereof very favorably by making n-butyl acrylate contained in an amount of 0 to 50 mass %.

### (Other: copolymerizable monomer)

The alkyl (meth)acrylate may be copolymerized with n-decyl (meth)acrylate, n-dodecyl (meth)acrylate, n-octadecyl acrylate, cyanomethyl (meth)acrylate, 1-cyanoethyl (meth)acrylate, 2-cyanoethyl (meth)acrylate, 1-cyanopropyl (meth)acrylate, 2-cyanopropyl (meth)acrylate, 3-cyanopropyl (meth)acrylate, 4-cyanobutyl (meth)acrylate, 6-cyanohexyl (meth)acrylate, or 2-ethyl-6-cyanohexyl (meth)acrylate, 8-cyanooctyl (meth)acrylate or the like.

Alternatively, the alkyl (meth)acrylate may be copolymerized with an alkoxyalkyl acrylate, such as 2-methoxyethyl acrylate, 2-ethoxyethyl acrylate, 2-(n-propoxy)ethyl acrylate, 2-(n-butoxy)ethyl acrylate, 3-methoxypropyl acrylate or 2-(n-butoxy)propyl acrylate.

Yet alternatively, the alkyl (meth)acrylate may be copolymerized with a fluorine-containing (meth)acrylic ester such as 1,1-dihydroperfluoroethyl (meth)acrylate, 1,1-dihydroperfluoropropyl (meth)acrylate, 1,1,5-trihydroperfluorohexyl (meth)acrylate, 1,1,2,2-tetrahydroperfluoropropyl (meth)acrylate, 1,1,7-trihydroperfluoroheptyl (meth)acrylate, 1,1-dihydroperfluorooctyl (meth)acrylate, or 1,1-dihydroperfluorodecyl (meth)acrylate; a hydroxyl group-containing (meth)acrylic ester such as 1-hydroxypropyl (meth)acrylate, 2-hydroxypropyl (meth)acrylate or hydroxyethyl (meth)acrylate; a tertiary amino group-containing (meth)acrylic ester such as diethylaminoethyl (meth)acrylate or dibutylaminoethyl (meth)acrylate; or the like.

The monomer copolymerizable with the alkyl (meth)acrylate can be selected properly in the range that does not impair the properties of the tire bladder. Examples thereof include, but are not limited to, ethylenic unsaturated compounds including alkyl vinyl ketones such as methyl vinyl ketone; vinyl and allyl ethers such as vinyl ethyl ether and allyl methyl ether; vinyl aromatic compounds such as styrene, α-methylstyrene, chlorostyrene, vinyltoluene, and vinyl naphtalene; vinyl nitriles such as acrylonitrile and methacrylonitrile; acrylamide, vinyl acetate, ethylene, propylene, butadiene, isoprene, pentadiene, vinyl chloride, vinylidene chloride, vinyl fluoride, vinylidene fluoride, vinyl propionate, alkyl fumarate and the like.

### (Crosslinkable monomer)

The crosslinkable monomer in the present embodiment is a monoalkyl maleate and/or monoalkoxyalkyl maleate.

The crosslinkable monomer is copolymerized during vulcanization cf the acrylic rubber composition for intermolecular crosslinking between the alkyl acrylate or alkyl methacrylate.

The monoalkyl maleate and/or monoalkoxyalkyl maleate is preferably at least one compound selected from monoethyl maleate, monobutyl maleate, monocyclohexyl maleate, monoethoxyethyl maleate, and monomethoxybutyl maleate.

The monoalkyl maleate and/or monoalkoxyalkyl maleate-derived structural unit is used in an amount of 0.5 to 3 mass % with respect to 100 mass % of the acrylic rubber. When the content of the structural unit is less than 0.5 mass %, the acrylic rubber composition may not crosslink effectively. Alternatively when the content of the structural unit is more than 3 mass %, the acrylic rubber composition may show decrease of the elongation in high-temperature test.

In addition to the monoalkyl maleate and/or monoalkoxyalkyl maleate, the crosslinkable monomer may contain a carboxyl group such as acrylic acid, methacrylic acid, crotonic acid, 2-pentene acid, maleic acid, fumaric acid, itaconic acid, fumaric acid monoalkyl ester or cinnamic acid.

### (Ethylene)

The acrylic rubber can contain the ethylene-derived structural unit in an amount of 2.5 mass % or less with respect to 100 parts by mass of the acrylic rubber. The acrylic rubber, when copolymerized with ethylene, can give a tire bladder improved in low-temperature resistance. In particular, when the content of the ethylene-derived structural unit is not more than 2.5 mass % with respect to 100 parts by mass of the acrylic rubber, it is possible to improve the low-temperature resistance of the tire bladder and simultaneously make the elongation in a high-temperature atmosphere more favorable.

The acrylic rubber can be prepared by copolymerization of the monomers described above by means of a known method such as emulsion polymerization, suspension polymerization, solution polymerization, or bulk polymerization.

### [Carbon black]

The carbon black in the present embodiment has an arithmetic average particle diameter (hereinafter, referred to simply as "particle diameter"), as determined by JIS-Z8901, of 20 to 30 nm and a DBP oil absorption of 70 to 130 ml/100 g.

A carbon black particle diameter of less than 20 nm leads to deterioration in processability of the acrylic rubber composition. Alternatively, a carbon black having a particle diameter of more than 30 nm causes a problem that the modulus, among the physical properties, of the acrylic rubber composition increases significantly

Alternatively, a carbon black having a DBP oil absorption of less than 70 ml/100 g leads to deterioration in the elongation of the acrylic rubber composition in high-temperature tensile test. A carbon black having a DBP oil absorption of more than 130 ml/100 g causes a problem that the modulus, among the physical properties, of the acrylic rubber composition increases significantly.

More preferably, the carbon black has a particle diameter of 22 to 28 nm and a DBP oil absorption of 70 to 130 ml/100 g.

The carbon black is contained in the acrylic rubber composition of the present embodiment in an amount of 30 to 200 parts by mass with respect to 100 parts by mass of the acrylic rubber. When the carbon black content is less than 30 parts by mass, the acrylic rubber composition has lowered reinforcement. Alternatively when the carbon black content is more than 200 parts by mass, the acrylic rubber composition shows lowered elongation in high-temperature tensile test.

### [Vulcanizing agent]

It is possible to convert the acrylic rubber composition in the present embodiment composition into a vulcanized rubber by vulcanization after addition of a processing aid, a filler, heat-resistant antioxidant, vulcanizing agent and a vulcanization accelerator thereto and thus to obtain a vulcanized tire bladder.

The acrylic rubber composition in the present embodiment contains as vulcanizing agent a polyamine compound in an amount of 0.1 to 10 parts by mass, more preferably, 0.1 to 4 parts by mass, with respect to 100 parts by mass of the acrylic rubber. It is possible to vulcanize the acrylic rubber composition favorably in the balance of physical properties in the range above. When the polyamine compound content is in an amount of less than 0.1 part by mass with respect to 100 parts by mass of the acrylic rubber, the acrylic rubber composition may not vulcanize. Alternatively, when the content is more than 10 parts by mass, the acrylic rubber composition shows lowered elongation in high-temperature tensile test.

The vulcanizing agent used is a polyamine compound, when the crosslinkable monomer is a carboxyl group-containing monomer. It is more preferable to use a vulcanization system containing additionally a guanidine-based compound as vulcanization accelerator.

The polyamine compound includes aromatic polyamine compounds selected from 4,4'-bis(4-aminophenoxy)biphenyl, bis[4-(3-aminophenoxy)phenyl]sulfone, bis[4-(4-aminophenoxy)phenyl]sulfone, and 9,9-bis(4-aminophenyl)fluorene. These compounds are well-balanced in processing safety, heat resistance, and elongation in a high-temperature atmosphere.

The guanidine-based compounds include guanidine, tetramethylguanidine, dibutylguanidine, diphenylguanidine, di-o-tolylguanidine and the like.

The guanidine compound, which is added for regulation of vulcanization rate, is added preferably in an amount of 0.1 to 5 parts by mass, more preferably 0.1 to 3 parts by mass with respect to 100 parts by mass of the acrylic rubber. A guanidine compound content of 5 parts or more by mass may result in high cost and is thus unfavorable.

### [Antioxidant]

The acrylic rubber composition in the present embodiment contains an imidazole compound in an amount of 0.1 to 5 parts by mass, more preferably, 0.1 to 4 parts by mass, with respect to 100 parts by mass of the acrylic rubber as antioxidant. An acrylic rubber content in the range above leads to improved elongation in high-temperature tensile test. When the imidazole compound content is less than 0.1 part by mass with respect to 100 parts by mass of the acrylic rubber, the acrylic rubber composition shows lowered elongation in high-temperature test. Alternatively when it is more than 5 parts by mass, the acrylic rubber composition may not vulcanize.

For example, the imidazole compounds favorably used is, but not limited to, at least one compound selected from 2-mercaptobenzimidazole, 2-mercaptomethylbenzimidazole, and 4,5-mercaptomethylbenzimidazole.

The acrylic rubber composition in the present embodiment may contain an amine-based, carbamic acid metal salt-based, phenol-based, sulfur-based, phosphorus-based, or other antioxidant. Among the antioxidants above, use of at least one antioxidant selected from amine-, phosphorus-, and sulfur-based antioxidants is preferable, as it leads to improvement in elongation in high-temperature tensile test. The amount of the antioxidant added is preferably 0.1 to 10 parts by mass with respect to 100 parts by mass of the acrylic rubber.

Examples of the amine-based, carbamic acid metal salt-based, phenol-based, sulfur-based, phosphorus-based, and other antioxidants favorably used include, but are not limited to, one or more antioxidants selected from 4,4'-α,α-dimethylbenzyldiphenylamine, tris(nonylphenyl) phosphite, triisodecyl phosphite, dilauryl thiodipropionate and the like.

### [Other components]

The acrylic rubber composition in the present embodiment may contain, besides the carbon black, a reinforcing agent such as surface-modified calcium carbonate and/or a filler according to the desired rubber physical properties, as two or more thereof are mixed. The total addition amount is preferably 30 to 200 parts by mass with respect to 100 parts by mass of the acrylic rubber. In addition, a wax may be added as lubricant in an amount of 0.1 to 10 parts by mass with respect to 100 parts by mass of the acrylic rubber.

In addition, the acrylic rubber composition can contain plasticizers commonly used in rubbers. Examples thereof include, but are not limited to, ester-based plasticizers, ether-based plasticizers such as polyoxyethylene ether, ether-ester-based plasticizers and the like. Thus, various plasticizers may be used. The amount of the plasticizer added is up to about 50 parts by mass with respect to 100 parts by mass of the acrylic rubber.

The rubber component in the acrylic rubber composition for use in the present invention contains an acrylic rubber as the principal component, but may contain, as needed besides the acrylic rubber, natural rubbers, synthetic rubbers such as IIR, BR, NBR, NBR, CR, EPDM, FKM, Q, CSM, CO, ECO, and CM and the like.

### <Tire bladder >

The acrylic rubber composition in the present embodiment described above is used for production of a tire bladder in the present embodiment. The vulcanized product of the acrylic rubber composition in the present embodiment is superior in processing safety and heat resistance and also in elongation at break in a high-temperature atmosphere and thus elongates the life cycle of the tire bladder.

Kneading, molding, and vulcanization machines commonly used in the rubber industry may be used in production of the tire bladder.

### Exampels

Hereinafter, the present invention will be described in detail with reference to Examples, but it should be understood that the present invention is not particularly limited by these Examples.

### [Example 1]

### <Preparation of acrylic rubber>

0.15 kg of monobutyl maleate, 16 kg of 4 mass % aqueous solution of partially saponified vinyl alcohol, and 23 g of sodium acetate were placed in a pressure reactor and mixed thoroughly therein with a stirrer, to give a uniform suspension. The air in the top region of the reactor was substituted with nitrogen and the pressure was adjusted to 30 kg/cm². While the suspension was stirred continuously and the temperature in the reactor was kept at 55°C, 11 kg of methyl acrylate and an aqueous t-butyl hydroperoxide solution were added thereto separately through an injection port under pressure, to initiate polymerization. The reactor temperature was kept at 55°C during the reaction, which ended after 9 hours. An aqueous sodium borate solution was added to the polymer solution for solidification of the polymer and the resulting polymer was dehydrated and dried, to give an acrylic rubber A.

The acrylic rubber obtained had a copolymer composition of 99.5 parts by mass of methyl acrylate monomer unit and 0.5 part by mass of monobutyl maleate monomer unit. The monomer unit components were obtained by obtaining the nuclear magnetic resonance spectrum of the rubber and determining the respective units quantitatively from the spectrum.

2.7 g (1 part by mass) of stearic acid, 5.4 g (2 parts by mass) of antioxidant A, 2.7 g (1 part by mass) of antioxidant B, 2.7 g (1 part by mass) of antioxidant D, 162 g (60 parts by mass) of carbon black a, and 0.8 g (0.3 part by mass) of stearyl amine were blended with 270 g (100 parts by mass) of the acrylic rubber thus obtained in a pressurized kneader tester. 2.7 g (1 part by mass) of vulcanizing agent X and 4.1 g (1.5 parts by mass) of diphenylguanidine were blended with the composition by using an 8-inch open roll, to give an acrylic rubber composition. The acrylic rubber composition obtained was heat-treated with an electrically heated hot press at 170°C for 20 minutes, to give a vulcanized sheet of the acrylic rubber composition. The scorch time of the acrylic rubber composition obtained, the rubber hardness of the vulcanized sheet, and the elongation at break of the sample after heat aging at 160°C for 504 hours under an atmosphere at 160°C were determined. The results are summarized in Table 1.

### <Measuring method>

The scorch time was determined according to JIS K6300-1. Alternatively, the hardness was determined according to JIS K6253 by using a durometer. The condition of the heat aging test, such as temperature and period, was set according to JIS K6257. The elongation at break in a high-temperature atmosphere was determined according to JIS K6251, and the temperature in the tester was set according to JIS K6250, 12.2.

### [Example 2]

An acrylic rubber B was prepared in a manner similar to Example 1, except that the methyl acrylate added was replaced with 11 kg of ethyl acrylate. The acrylic rubber obtained had a copolymer composition of 99.5 parts by mass of ethyl acrylate monomer unit and 0.5 part by mass of monobutyl maleate monomer unit.

An acrylic rubber composition and a vulcanized sheet were prepared from the acrylic rubber thus obtained in a manner similar to Example 1 and examined similarly to Example 1.

### [Example 3]

0.25 kg of monobutyl maleate, 16 kg of 4 mass % aqueous solution of partially saponified vinyl alcohol, and 23 g of sodium acetate were placed in a pressure reactor and mixed thoroughly with a stirrer, to give a uniform suspension. The air in top region of the reactor was substituted with nitrogen; ethylene was fed into the top region of the reactor under pressure; and the pressure therein was adjusted to 35 kg/cm². While the suspension was stirred continuously and the temperature in the reactor was kept at 55°C, 5.4 kg of methyl acrylate, 5.6 kg of butyl acrylate, and an aqueous t-butyl hydroperoxide solution were added thereto separately through an injection port under pressure, to initiate polymerization. The reactor temperature was kept at 55°C during the reaction, which ended after 9 hours. An aqueous sodium borate solution was added to the polymer solution for solidification of the polymer and the resulting polymer was dehydrated and dried, to give an acrylic rubber C. The acrylic rubber obtained had a copolymer composition of 2 parts by mass of ethylene monomer unit, 48 parts by mass of methyl acrylate monomer unit, 49 parts by mass of butyl acrylate monomer unit, and 1 part by mass of monobutyl maleate monomer unit.

An acrylic rubber composition and a vulcanized sheet were prepared from the acrylic rubber thus obtained in a manner similar to Example 1 and examined similarly to Example 1.

### [Example 4]

An acrylic rubber D was prepared in a manner similar to Example 3, except that 5.4 kg of the methyl acrylate added was replaced with 7.7 kg of ethyl acrylate and 0.4 kg of the monobutyl maleate, and 3.3 kg of butyl acrylate were added. The acrylic rubber obtained had a copolymer composition of 2 parts by mass of ethylene monomer unit, 67.2 parts by mass of ethyl acrylate monomer unit, 29.2 parts by mass of butyl acrylate monomer unit, and 1.6 parts by mass of monobutyl maleate monomer unit.

An acrylic rubber composition and a vulcanized sheet were prepared from the acrylic rubber thus obtained in a manner similar to Example 1 and examined similarly to Example 1.

### [Example 5]

An acrylic rubber E was prepared in a manner similar to Example 4, except that 7.7 kg of ethyl acrylate was added, 3.3 kg of the butyl acrylate added was replaced with 8.8 kg of ethyl acrylate and 2.2 kg of butyl acrylate was added. The acrylic rubber obtained had a copolymer composition of 2 parts by mass of ethylene monomer unit, 76.7 parts by mass of ethyl acrylate monomer unit, 19.7 parts by mass of butyl acrylate monomer unit, and 1.6 parts by mass of monobutyl maleate monomer unit.

An acrylic rubber composition and a vulcanized sheet were prepared from the acrylic rubber thus obtained in a manner similar to Example 1 and examined similarly to Example 1.

### [Example 6]

An acrylic rubber F was prepared in a manner similar to Example 5, except that 0.4 kg of the monobutyl maleate added was replaced with 0.4 kg of monoethyl maleate. The acrylic rubber obtained had a copolymer composition of 2 parts by mass of ethylene monomer unit, 76.7 parts by mass of ethyl acrylate monomer unit, 19.7 parts by mass of butyl acrylate monomer unit, and 1.6 parts by mass of monoethyl maleate monomer unit.

An acrylic rubber composition and a vulcanized sheet were prepared from the acrylic rubber thus obtained in a manner similar to Example 1 and examined similarly to Example 1.

### [Example 7]

An acrylic rubber G was prepared in a manner similar to Example 5, except that 0.4 kg of the monobutyl maleate was replaced with 0.8 kg of monobutyl maleate. The acrylic rubber obtained had a copolymer composition of 2 parts by mass of ethylene monomer unit, 76 parts by mass of ethyl acrylate monomer unit, 19 parts by mass of butyl acrylate monomer unit, and 3 parts by mass of monobutyl maleate monomer unit.

An acrylic rubber composition and a vulcanized sheet were prepared from the acrylic rubber thus obtained in a manner similar to Example 1 and examined similarly to Example 1.

### [Example 8]

An acrylic rubber H was prepared in a manner similar to Example 5, except that 3.3 kg of the monobutyl maleate added was replaced with 0.4 kg of monocyclohexyl maleate. The acrylic rubber obtained had a copolymer composition of 2 parts by mass of ethylene monomer unit, 76.7 parts by mass of ethyl acrylate monomer unit, 19.7 parts by mass of butyl acrylate monomer unit, and 1.6 parts by mass of monocyclohexyl maleate monomer unit.

An acrylic rubber composition and a vulcanized sheet were prepared from the acrylic rubber thus obtained in a manner similar to Example 1 and examined similarly to Example 1.

### [Example 9]

An acrylic rubber I was prepared in a manner similar to Example 5, except that
0.4 kg of the monobutyl maleate added was replaced with 0.4 kg of monoethoxyethyl maleate. The acrylic rubber obtained had a copolymer composition of 2 parts by mass of ethylene monomer unit, 76.7 parts by mass of ethyl acrylate monomer unit, 19.7 parts by mass of butyl acrylate monomer unit, and 1.6 parts by mass of monoethoxyethyl maleate monomer unit.

An acrylic rubber composition and a vulcanized sheet were prepared from the acrylic rubber thus obtained in a manner similar to Example 1 and examined similarly to Example 1.

### [Example 10]

An acrylic rubber J was prepared in a manner similar to Example 5, except that 0.4 kg of the monobutyl maleate was replaced with 0.4 kg of monomethoxybutyl maleate. The acrylic rubber obtained had a copolymer composition of 2 parts by mass of ethylene monomer unit, 76.7 parts by mass of ethyl acrylate monomer unit, 19.7 parts by mass of butyl acrylate monomer unit, and 1.6 parts by mass of monomethoxybutyl maleate monomer unit.

An acrylic rubber composition and a vulcanized sheet were prepared from the acrylic rubber thus obtained in a manner similar to Example 1 and examined similarly to Example 1.

### [Example 11]

An acrylic rubber K was prepared in a manner similar to Example 2, except that 0.15 kg of monobutyl maleate was added, 11 kg of the ethyl acrylate added was replaced with 0.4 kg of monobutyl maleate, 9 kg of ethyl acrylate was added and 2 kg of butyl acrylate was added. The acrylic rubber obtained had a copolymer composition of 79.6 parts by mass ethyl acrylate monomer unit, 18.8 parts by mass butyl acrylate monomer unit, and 1.6 parts by mass monobutyl maleate monomer unit.

An acrylic rubber composition and a vulcanized sheet were prepared from the acrylic rubber thus obtained in a manner similar to Example 1 and examined similarly to Example 1.

### [Example 12]

An acrylic rubber L was prepared in a manner similar to Example 7, except that ethylene was fed into the top region of the reactor under pressure, the pressure was adjusted to 45 kg/cm², and 0.8 kg of monobutyl maleate was fed thereto. The acrylic rubber obtained had a copolymer composition of 2.5 parts by mass of ethylene monomer unit, 75.7 parts by mass of ethyl acrylate monomer unit, 18.8 parts by mass of butyl acrylate monomer unit, and 3 parts by mass of monobutyl maleate monomer unit.

An acrylic rubber composition and a vulcanized sheet were prepared from the acrylic rubber thus obtained in a manner similar to Example 1 and examined similarly to Example 1.

### [Example 13]

An acrylic rubber M was prepared in a manner similar to Example 5, except that 8.8 kg of the ethyl acrylate added was replaced with 5.3 kg of methyl acrylate and 5.7 kg of butyl acrylate was added. The acrylic rubber obtained had a copolymer composition of 2 parts by mass of ethylene monomer unit, 46.4 parts by mass of methyl acrylate monomer unit, 50 parts by mass of butyl acrylate monomer unit, and 1.6 parts by mass of monobutyl maleate monomer unit.

An acrylic rubber composition and a vulcanized sheet were prepared from the acrylic rubber thus obtained in a manner similar to Example 1 and examined similarly to Example 1.

### [Example 14]

An acrylic rubber composition was prepared in a manner similar to Example 1, except that 176 g (65 parts by mass) of carbon black b was added, replacing 162 g (60 parts by mass) of carbon black a, to the acrylic rubber obtained in a manner similar to Example 5. A vulcanized sheet was prepared from the acrylic rubber composition obtained in a manner similar to Example 1 and examined similarly to Example 1.

### [Example 15]

An acrylic rubber composition was prepared in a manner similar to Example 1, except that 189 g (70 parts by mass) of carbon black c was added, replacing 162 g (60 parts by mass) of carbon black a, to the acrylic rubber obtained in a manner similar to Example 5. A vulcanized sheet was prepared from the acrylic rubber composition obtained in a manner similar to Example 1 and examined similarly to Example 1.

### [Example 16]

An acrylic rubber composition was prepared in a manner similar to Example 1, except that 162 g (60 parts by mass) of carbon black d was added, replacing 162 g (60 parts by mass) of carbon black a, to the acrylic rubber obtained in a manner similar to Example 5. A vulcanized sheet was prepared from the acrylic rubber composition obtained in a manner similar to Example 1 and examined similarly to Example 1.

### [Example 17]

An acrylic rubber composition was prepared in a manner similar to Example 1, except that 176 g (65 parts by mass) of carbon black e was added, replacing 162 g (60 parts by mass) of carbon black a, to the acrylic rubber obtained in a manner similar to Example 5. A vulcanized sheet was prepared from the acrylic rubber composition obtained in a manner similar to Example 1 and examined similarly to Example 1.

### [Example 18]

An acrylic rubber composition was prepared in a manner similar to Example 1, except that 189 g (70 parts by mass) of carbon black f was added, replacing 162 g (60 parts by mass) of carbon black a, to the acrylic rubber obtained in a manner similar to Example 5. A vulcanized sheet was prepared from the acrylic rubber composition obtained in a manner similar to Example 1 and examined similarly to Example 1.

### [Example 19]

An acrylic rubber composition was prepared in a manner similar to Example 1, except that 162 g (60 parts by mass) of carbon black g was added, replacing 162 g (60 parts by mass) of carbon black a, to the acrylic rubber obtained in a manner similar to Example 5. A vulcanized sheet was prepared from the acrylic rubber composition obtained in a manner similar to Example 1 and examined similarly to Example 1.

### [Example 20]

An acrylic rubber composition was prepared in a manner similar to Example 1, except that 0.3 g (0 1 part by mass) of antioxidant D was added, replacing 2.7 g (1 part by mass) of the antioxidant D, to the acrylic rubber obtained in a manner similar to Example 5. A vulcanized sheet was prepared from the acrylic rubber composition obtained in a manner similar to Example 1 and examined similarly to Example 1.

### [Example 21]

An acrylic rubber composition was prepared in a manner similar to Example 1, except that 2.7 g (1 part by mass) of antioxidant B was added, 0.3 g (0.1 part by mass) of antioxidant B was added, replacing 2.7 g (1 part by mass) of the antioxidant D added, and 10.8 g (4 parts by mass) of antioxidant D was added to the acrylic rubber obtained in a manner similar to Example 5. A vulcanized sheet was prepared from the acrylic rubber composition obtained in a manner similar to Example 1 and examined similarly to

### Example 1.

### [Example 22]

An acrylic rubber composition was prepared in a manner similar to Example 1, except that 0.3 g (0.1 part by mass) of antioxidant B was added, replacing 2.7 g (1 part by mass) of the antioxidant B, to the acrylic rubber obtained in a manner similar to Example 5. A vulcanized sheet was prepared from the acrylic rubber composition obtained in a manner similar to Example 1 and examined similarly to Example 1.

### [Example 23]

An acrylic rubber composition was prepared in a manner similar to Example 1, except that 2.7 g (1 part by mass) of antioxidant B was added, 10.8 g (4 parts by mass) of antioxidant B was added, replacing 2.7 g (1 part by mass) of the antioxidant D, and 0.3 g (0.1 part by mass) of antioxidant D was added to the acrylic rubber obtained in a manner similar to Example 5. A vulcanized sheet was prepared from the acrylic rubber composition obtained in a manner similar to Example 1 and examined similarly to Example 1.

### [Example 24]

An acrylic rubber composition was prepared in a manner similar to Example 1, except that 0.3 g (0.1 part by mass) of antioxidant A was added, replacing 5.4 g (2 parts by mass) of the antioxidant A, to the acrylic rubber obtained in a manner similar to Example 5. A vulcanized sheet was prepared from the acrylic rubber composition obtained in a manner similar to Example 1 and examined similarly to Example 1.

### [Example 25]

An acrylic rubber composition was prepared in a manner similar to Example 1, except that 21.6 g (8 parts by mass) of antioxidant A was added, replacing 5.4 g (2 parts by mass) of the antioxidant A, to the acrylic rubber obtained in a manner similar to Example 5. A vulcanized sheet was prepared from the acrylic rubber composition obtained in a manner similar to Example 1 and examined similarly to Example 1.

### [Example 26]

An acrylic rubber composition was prepared in a manner similar to Example 1, except that 2.7 g (1 part by mass) of antioxidant C was added, replacing 2.7 g (1 part by mass) of the antioxidant B, to the acrylic rubber obtained in a manner similar to Example 5. A vulcanized sheet was prepared from the acrylic rubber composition obtained in a manner similar to Example 1 and examined similarly to Example 1.

### [Example 27]

An acrylic rubber composition was prepared in a manner similar to Example 1, except that 2.7 g (1 part by mass) of antioxidant E was added, replacing 2.7 g (1 part by mass) of the antioxidant D, to the acrylic rubber obtained in a manner similar to Example 5. A vulcanized sheet was prepared from the acrylic rubber composition obtained in a manner similar to Example 1 and examined similarly to Example 1.

### [Example 28]

An acrylic rubber Q was prepared in a manner similar to Example 5, except that 8.8 kg of ethyl acrylate, 2.2 kg of butyl acrylate, 0.4 kg of monoethyl maleate (replacing 0.4 kg of monobutyl maleate), 4.4 kg of ethyl acrylate and 6.6 kg of butyl acrylate were added. The acrylic rubber obtained had a copolymer composition of 2 parts by mass of ethylene monomer unit, 38.6 parts by mass of ethyl acrylate monomer unit, 57.8 parts by mass of butyl acrylate monomer unit, and 1.6 parts by mass of monoethyl maleate monomer unit.

An acrylic rubber composition and a vulcanized sheet were prepared from the acrylic rubber thus obtained in a manner similar to Example 1 and examined similarly to Example 1.

### [Example 29]

An acrylic rubber composition was prepared in a manner similar to Example 1, except that the antioxidant B was not added to the acrylic rubber obtained in a manner similar to Example 5. A vulcanized sheet was prepared from the acrylic rubber composition obtained in a manner similar to Example 1 and examined similarly to Example 1.

### [Example 30]

An acrylic rubber composition was prepared in a manner similar to Example 1, except that 21.6 g (8 parts by mass) of antioxidant B was added to the acrylic rubber obtained in a manner similar to Example 5. A vulcanized sheet was prepared from the acrylic rubber composition obtained in a manner similar to Example 1 and examined similarly to Example 1.

### [Example 31]

An acrylic rubber composition was prepared in a manner similar to Example 1, except that 13.5 g (5 parts by mass) of antioxidant D was added to the acrylic rubber obtained in a manner similar to Example 5. A vulcanized sheet was prepared from the acrylic rubber composition obtained in a manner similar to Example 1 and examined similarly to Example 1.

### [Example 32] (not part of the present invention)

An acrylic rubber composition was prepared in a manner similar to Example 1, except that 1.6 g of vulcanizing agent Y was added, replacing the vulcanizing agent X, to the acrylic rubber obtained in a manner similar to Example 5. A vulcanized sheet was prepared from the acrylic rubber composition obtained in a manner similar to Example 1 and examined similarly to Example 1.

### [Comparative Example 1]

An acrylic rubber N was prepared in a manner similar to Example 5, except that ethylene was fed into the top region of the reactor under pressure was adjusted to 80 kg/cm² instead of 35 kg/cm², and 0.4 kg of the monobutyl maleate added was replaced with 0.3 kg of monoethyl maleate. The acrylic rubber obtained had a copolymer composition of 5 parts by mass of ethylene monomer unit, 74.8 parts by mass of ethyl acrylate monomer unit, 19 parts by mass of butyl acrylate monomer unit and 1.2 parts by mass of monoethyl maleate monomer unit.

An acrylic rubber composition and a vulcanized sheet were prepared from the acrylic rubber thus obtained in a manner similar to Example 1 and examined similarly to Example 1.

### [Comparative Example 2]

An acrylic rubber O was prepared in a manner similar to Example 5, except that 0.4 kg of the monobutyl maleate added was replaced with 1 kg of monoethyl maleate. The acrylic rubber obtained had a copolymer composition of 2 parts by mass of ethylene monomer unit. 76.2 parts by mass of ethyl acrylate monomer unit, 19.8 parts by mass of butyl acrylate monomer unit, and 4 parts by mass of monoethyl maleate monomer unit.

An acrylic rubber composition and a vulcanized sheet were prepared from the acrylic rubber thus obtained in a manner similar to Example 1 and examined similarly to Example 1.

### [Comparative Example 3]

An acrylic rubber (polymer species: P in Table 1) was prepared in a manner similar to Example 5, except that 0.4 kg of the monobutyl maleate added was replaced with 0.4 kg of glycidyl methacrylate. The acrylic rubber obtained had a copolymer composition of 2 parts by mass of ethylene monomer unit, 76.2 parts by mass of ethyl acrylate monomer unit, 19.8 parts by mass of butyl acrylate monomer unit, and 1.6 parts by mass of glycidyl methacrylate monomer unit.

An acrylic rubber composition and a vulcanized sheet were prepared from the acrylic rubber thus obtained in a manner similar to Example 1 and examined similarly to Example 1.

### [Comparative Example 4]

An acrylic rubber composition was prepared in a manner similar to Example 1, except that 175 g of carbon black h was added, replacing 162 g of carbon black a, to the acrylic rubber obtained in a manner similar to Example 5. A vulcanized sheet was prepared from the acrylic rubber composition obtained in a manner similar to Example 1 and examined similarly to Example 1.

### [Comparative Example 5]

An acrylic rubber composition was prepared in a manner similar to Example 1, except that 175 g of carbon black i was added, replacing 162 g of carbon black a, to the acrylic rubber obtained in a manner similar to Example 5. A vulcanized sheet was prepared from the acrylic rubber composition obtained in a manner similar to Example 1 and examined similarly to Example 1.

### [Comparative Example 6]

An acrylic rubber composition was prepared in a manner similar to Example 1, except that the antioxidant D was not added to the acrylic rubber obtained in a manner similar to Example 5. A vulcanized sheet was prepared from the acrylic rubber composition obtained in a manner similar to Example 1 and examined similarly to Example 1.

**[Table 1]**

| Data No. | Unit | Example 1 | Example 2 | Example 3 | Example 4 | Example 5 | Example 6 | Example 7 | Example 8 | Example 9 | Example 10 | Example 11 |
|---|---|---|---|---|---|---|---|---|---|---|---|---|
| Kind of acrylic rubber | | A | B | C | D | E | F | G | H | I | J | K |
| Alkyl acrylate | mass % | 99.5 | 99.5 | 97 | 96.4 | 96.4 | 96.4 | 95 | 96.4 | 96.4 | 96.4 | 98.4 |
| Monoalkyl maleate/ Monoalkoxyalkyl maleate | mass % | 0.5 | 0.5 | 1 | 1.6 | 1.6 | 1.6 | 3 | 1.6 | 1.6 | 1.6 | 1.6 |
| Ester | mass % | 0 | 0 | 2 | 2 | 2 | 2 | 2 | 2 | 2 | 2 | 0 |
| Kind of carbon black | | a | a | a | a | a | a | a | a | a | a | a |
| Acrylic rubber | parts by mass | 100 | 100 | 100 | 100 | 100 | 100 | 100 | 100 | 100 | 100 | 100 |
| Stearic acid | parts by mass | 1 | 1 | 1 | 1 | 1 | 1 | 1 | 1 | 1 | 1 | 1 |
| Carbon black | parts by mass | 60 | 60 | 60 | 60 | 60 | 60 | 60 | 60 | 60 | 60 | 60 |
| Antioxidant A | parts by mass | 2 | 2 | 2 | 2 | 2 | 2 | 2 | 2 | 2 | 2 | 2 |
| Antioxidant B | parts by mass | 1 | 1 | 1 | 1 | 1 | 1 | 1 | 1 | 1 | 1 | 1 |
| Antioxidant C | parts by mass | - | - | - | - | - | - | - | - | - | - | - |
| Antioxidant D | parts by mass | 1 | 1 | 1 | 1 | 1 | 1 | 1 | 1 | 1 | 1 | 1 |
| Antioxidant E | parts by mass | - | - | - | - | - | - | - | - | - | - | - |
| Stearyl amine | parts by mass | 0.3 | 0.3 | 0.3 | 0.3 | 0.3 | 0.3 | 0.3 | 0.3 | 0.3 | 0.3 | 0.3 |
| Vulcanizing agent X | parts by mass | 1.0 | 1.0 | 1.0 | 1.0 | 1.0 | 1.0 | 1.0 | 1.0 | 1.0 | 1.0 | 1.0 |
| Vulcanizing agent Y | parts by mass | - | - | - | - | - | - | - | - | - | - | - |
| Diphenylguanidine | parts by mass | 1.5 | 1.5 | 1.5 | 1.5 | 1.5 | 1.5 | 1.5 | 1.5 | 1.5 | 1.5 | 1.5 |
| Total amount | | 166.3 | 166.3 | 166.3 | 166.3 | 166.3 | 166.3 | 166.3 | 166.3 | 166.3 | 166.3 | 166.3 |
| Scorch time MLt5 125°C | min. | 13.4 | 13.4 | 14.6 | 13.0 | 13.1 | 13.4 | 14.2 | 14.5 | 13.0 | 15.0 | 14.7 |
| Primary vulcanizate Hardness | Shore A | 65 | 64 | 64 | 64 | 64 | 64 | 64 | 64 | 64 | 64 | 64 |
| High-temperature physical properties (after aging at 160°C for 504h under hot atmosphere at 160°C) Elongation at break | % | 272 | 260 | 237 | 220 | 224 | 232 | 213 | 235 | 217 | 215 | 223 |

**[Table 2]**

| Data No. | Unit | Example 12 | Example 13 | Example 14 | Example 15 | Example 16 | Example 17 | Example 18 | Example 19 | Example 20 | Example 21 | Example 22 |
|---|---|---|---|---|---|---|---|---|---|---|---|---|
| Kind of acrylic rubber | | L | M | E | E | E | E | E | E | E | E | E |
| Alkyl acrylate | mass % | 94.5 | 96.4 | 96.4 | 96.4 | 96.4 | 96.4 | 96.4 | 96.4 | 96.4 | 96.4 | 96.4 |
| Monoalkyl maleate/ Monoalkoxyalkyl maleate | mass % | 3 | 1.6 | 1.6 | 1.6 | 1.6 | 1.6 | 1.6 | 1.6 | 1.6 | 1.6 | 1.6 |
| Ester | mass % | 2.5 | 2 | 2 | 2 | 2 | 2 | 2 | 2 | 2 | 2 | 2 |
| Kind of carbon black | | a | a | b | c | d | e | f | g | a | a | a |
| Acrylic rubber | parts by mass | 100 | 100 | 100 | 100 | 100 | 100 | 100 | 100 | 100 | 100 | 100 |
| Stearic acid | parts by mass | 1 | 1 | 1 | 1 | 1 | 1 | 1 | 1 | 1 | 1 | 1 |
| Carbon blac | parts by mass | 60 | 60 | 65 | 70 | 60 | 65 | 70 | 60 | 60 | 60 | 60 |
| Antioxidant A | parts by mass | 2 | 2 | 2 | 2 | 2 | 2 | 2 | 2 | 2 | 2 | 2 |
| Antioxidant B | parts by mass | 1 | 1 | 1 | 1 | 1 | 1 | 1 | 1 | 1 | 0.1 | 0.1 |
| Antioxidant C | parts by mass | - | - | - | - | - | - | - | - | - | - | - |
| Antioxidant D | parts by mass | 1 | 1 | 1 | 1 | 1 | 1 | 1 | 1 | 0.1 | 4 | 1 |
| Antioxidant E | parts by mass | - | - | - | - | - | - | - | - | - | - | - |
| Stearyl amine | parts by mass | 0.3 | 0.3 | 0.3 | 0.3 | 0.3 | 0.3 | 0.3 | 0.3 | 0.3 | 0.3 | 0.3 |
| Vulcanizing agent X | parts by mass | 1.0 | 1.0 | 1.0 | 1.0 | 1.0 | 1.0 | 1.0 | 1.0 | 1.0 | 1.0 | 1.0 |
| Vulcanizing agent Y | parts by mass | - | - | - | - | - | - | - | - | - | - | - |
| Diphenylguanidine | parts by mass | 1.5 | 1.5 | 1.5 | 1.5 | 1.5 | 1.5 | 1.5 | 1.5 | 1.5 | 1.5 | 1.5 |
| Total amount | | 166.3 | 166.3 | 171.3 | 176.3 | 166.3 | 171.3 | 176.3 | 166.3 | 165.4 | 168.4 | 165.4 |
| Scorch time MLt5 125°C | min. | 14.3 | 14.6 | 13.7 | 13.5 | 13.4 | 13.2 | 14.3 | 14.0 | 13.6 | 14.3 | 14.5 |
| Primary vulcanizate Hardness | Shore A | 64 | 64 | 64 | 64 | 65 | 63 | 63 | 64 | 64 | 63 | 65 |
| High-temperature physical properties (after aging at 160°C for 504h under hot atmosphere at 160°C) Elongation at break | % | 251 | 233 | 235 | 261 | 232 | 271 | 290 | 239 | 240 | 239 | 242 |

**[Table 3]**

| Data No. | Unit | Example 23 | Example 24 | Example 25 | Example 26 | Example 27 | Example 28 | Example 29 | Example 30 | Example 31 | Example 32 |
|---|---|---|---|---|---|---|---|---|---|---|---|
| Kind of acrylic rubber | | E | E | E | E | E | Q | E | E | E | E |
| Alkyl acrylate | mass % | 96.4 | 96.4 | 96.4 | 96.4 | 96.4 | 96.4 | 96.4 | 96.4 | 96.4 | 96.4 |
| Monoalkyl maleate/ Monoalkoxyalkyl maleate | mass % | 1.6 | 1.6 | 1.6 | 1.6 | 1.6 | 1.6 | 1.6 | 1.6 | 1.6 | 1.6 |
| Ester | mass % | 2 | 2 | 2 | 2 | 2 | 2 | 2 | 2 | 2 | 2 |
| Kind of carbon black | | a | a | a | a | a | a | a | a | a | a |
| Acrylic rubber | parts by mass | 100 | 100 | 100 | 100 | 100 | 100 | 100 | 100 | 100 | 100 |
| Stearic acid | parts by mass | 1 | 1 | 1 | 1 | 1 | 1 | 1 | 1 | 1 | 1 |
| Carbon black | parts by mass | 60 | 60 | 60 | 60 | 60 | 60 | 60 | 60 | 60 | 60 |
| Antioxidant | parts by mass | 2 | 0.1 | 8 | 2 | 2 | 2 | 2 | 2 | 2 | 2 |
| Antioxidant B | parts by mass | 4 | 1 | 1 | - | 1 | 1 | - | 8 | 1 | 1 |
| Antioxidant C | parts by mass | - | - | - | 1 | - | - | - | - | - | - |
| Antioxidant D | parts by mass | 0.1 | 1 | 1 | 1 | - | 1 | 1 | 1 | 5 | 1 |
| Antioxidant E | parts by mass | - | - | - | - | 1 | - | - | - | - | - |
| Stearyl amine | parts by mass | 0.3 | 0.3 | 0.3 | 0.3 | 0.3 | 0.3 | 0.3 | 0.3 | 0.3 | 0.3 |
| Vulcanizing agent X | parts by mass | 1.0 | 1.0 | 1.0 | 1.0 | 1.0 | 1.0 | 1.0 | 1.0 | 1.0 | - |
| Vulcanizing agent Y | parts by mass | - | - | - | - | - | - | - | - | - | 0.6 |
| Diphenylguanidine | parts by mass | 1.5 | 1.5 | 1.5 | 1.5 | 1.5 | 1.5 | 1.5 | 1.5 | 1.5 | 1.5 |
| Total amount | | 168.4 | 164.4 | 172.3 | 166.3 | 166.3 | 166.3 | 165.3 | 173.3 | 170.3 | 165.9 |
| Scorch time MLt5 125°C | min. | 14.3 | 14.2 | 14.5 | 15.1 | 13.0 | 13.2 | 13.6 | 13.2 | 10.7 | 4.9 |
| Primary vulcanizate Hardness | Shore A | 62 | 65 | 64 | 64 | 64 | 63 | 63 | 61 | 65 | 65 |
| High-temperature physical properties (after aging at 160°C for 504h under hot atmosphere at 160°C) Elongation at break | % | 231 | 218 | 265 | 225 | 247 | 212 | 207 | 206 | 210 | 215 |

**[Table 4]**

| Data No. | Unit | Comparative Example 1 | Comparative Example 2 | Comparative Example 3 | Comparative Example 4 | Comparative Example 5 | Comparative Example 6 |
|---|---|---|---|---|---|---|---|
| Kind of acrylic rubber | | N | O | P | E | E | E |
| Alkyl acrylate | mass % | 93.8 | 96 | 96 | 96.4 | 96.4 | 96.4 |
| Monoalkyl maleate/ Monoalkoxyalkyl maleate | mass % | 1.2 | 4 | 0 | 1.6 | 1.6 | 1.6 |
| Ester | mass % | 5 | 0 | 2 | 2 | 2 | 2 |
| Kind of carbon black | | a | a | a | h | i | a |
| Acrylic rubber | parts by mass | 100 | 100 | 100 | 100 | 100 | 100 |
| Stearic acid | parts by mass | 1 | 1 | 1 | 1 | 1 | 1 |
| Carbon black | parts by mass | 60 | 60 | 60 | 65 | 65 | 60 |
| Antioxidant A | parts by mass | 2 | 2 | 2 | 2 | 2 | 2 |
| Antioxidant B | parts by mass | 1 | 1 | 1 | 1 | 1 | 1 |
| Antioxidant C | parts by mass | - | - | - | - | - | - |
| Antioxidant D | parts by mass | 1 | 1 | 1 | 1 | 1 | - |
| Antioxidant E | parts by mass | - | - | - | - | - | - |
| Stearyl amine | parts by mass | 0.3 | 0.3 | 0.3 | 0.3 | 0.3 | 0.3 |
| Vulcanizing agent X | parts by mass | 1.0 | 1.0 | 1.0 | 1.0 | 1.0 | 1.0 |
| Vulcanizing agent Y | parts by mass | | | | - | - | - |
| Diphenylguanidine | parts by mass | 1.5 | 1.5 | 1.5 | 1.5 | 1.5 | 1.5 |
| Total amount | | 166.3 | 166.3 | 166.3 | 177.3 | 171.3 | 165.3 |
| Scorch time MLt5 125°C | min. | 14.7 | 14.2 | 13.8 | 14.7 | 14.8 | 13.5 |
| Primary vulcanizate Hardness | Shore A | 66 | 67 | 63 | 64 | 65 | 62 |
| High-temperature physical properties (after aging at 160°C for 504h under hot atmosphere at 160°C) Elongation at break | % | 178 | 180 | 90 | 168 | 159 | 144 |

In Tables 1 to 4,
antioxidant A is 4,4'-α,α-dimethylbenzyldiphenylamine;
antioxidant B is tris(nonylphenyl) phosphite;
antioxidant C is triisodecyl phosphite;
antioxidant D is 2-mercaptobenzimidazole;
antioxidant E is 2-mercaptomethylbenzimidazole;
vulcanizing agent X is 4,4'-bis(4-aminophenoxy)biphenyl;
vulcanizing agent Y is hexamethylenediamine carbamate;
carbon black a is SEAST 3H (particle diameter: 28nm, DBP oil absorption: 126 ml/100 g) produced by Tokai Carbon Co., Ltd.;
carbon black b is SEAST 3 (particle diameter: 28nm, DBP oil absorption: 101 ml/100 g) produced by Tokai Carbon Co., Ltd.;
carbon black c is SEAST 300 (particle diameter: 28nm, DBP oil absorption: 75 ml/100 g) produced by Tokai Carbon Co., Ltd.;
carbon black d is SEAST KH (particle diameter: 24nm, DBP oil absorption: 119 ml/100 g) produced by Tokai Carbon Co., Ltd.;
carbon black e is SEAST 6 (particle diameter: 22nm, DBP oil absorption: 115 ml/100 g) produced by Tokai Carbon Co., Ltd.;
carbon black f is SEAST 600 (particle diameter: 23nm, DBP oil absorption: 75 ml/100 g) produced by Tokai Carbon Co., Ltd.;
carbon black g is SEAST 5H (particle diameter: 22nm, DBP oil absorption: 129 ml/100 g) produced by Tokai Carbon Co., Ltd.;
carbon black h is SEAST 116 (particle diameter: 38nm, DBP oil absorption: 133 ml/100 g) produced by Tokai Carbon Co., Ltd.;
carbon black i is SEAST SO (particle diameter: 43nm, DBP oil absorption: 115 ml/100 g) produced by Tokai Carbon Co., Ltd..

Other materials used were the respective commercial products. The particle diameter (arithmetic average particle diameter) and the DBP oil absorption were determined according to JIS Z8901.

As obvious from Tables 1 to 4 and as shown in Examples, the acrylic rubber compositions according to the present invention have longer scorch time and are superior in processing safety. The hardness of their vulcanizates was adjusted to 65 by modification of the carbon content. The vulcanizates according to the present invention had higher elongation at break in a high-temperature atmosphere. Although the scorch time of the vulcanizate was inferior in Example 32 than in Examples 1 to 31, the vulcanizate was found to have higher elongation at break even in a high-temperature atmosphere, similarly to those in Examples 1 to 31.

## Claims

1. A tire bladder of an acrylic rubber composition at least comprising:
100 parts by mass of an acrylic rubber containing 94.5 to 99.5 mass % of an alkyl (meth)acrylate-derived structural unit and 0.5 to 3 mass % of a monoalkyl maleate and/or monoalkoxyalkyl maleate-derived structural unit;
30 to 200 parts by mass of a carbon black having an arithmetic average particle diameter, as determined according to JIS-Z8901, of 20 to 30 nm and a DBP oil absorption of 70 to 130 ml/100 g;
0.1 to 5 parts by mass of an imidazole compound as antioxidant; and
0.1 to 10 parts by mass of a vulcanizing agent, wherein the vulcanizing agent is at least one compound selected from bis[4-(4-aminophenoxy)phenyl]sulfone, bis[4-(3-amino-phenoxy)phenyl]sulfone, 9,9-bis(4-aminophenyl)fluorene, and 4,4'-bis(4-aminophenoxy)biphenyl.

2. The tire bladder according to Claim 1, wherein the antioxidant is at least one compound selected from 2-mercaptobenzimidazole, 2-mercaptomethylbenzimidazole, and 4,5-mercaptomethylbenzimidazole.

3. The tire bladder of an acrylic rubber according to Claim 1 or 2, wherein the acrylic rubber contains additionally an ethylene-derived structural unit in an amount of 2.5 mass % or less.

4. The tire bladder according to any one of Claims 1 to 3,
wherein the acrylic rubber composition further comprises a guanidine-based compound as vulcanization accelerator in an amount of 0.1 to 5 parts by mass with respect to 100 parts by mass of the acrylic rubber.

5. The tire bladder according to any one of Claims 1 to 4,
wherein the acrylic rubber composition further comprises at least one additional antioxidant selected from amine-, phosphorus-, and sulfur-based antioxidants in an amount of 0.1 to 10 parts by mass blended with respect to 100 parts by mass of the acrylic rubber.

6. The tire bladder according to Claim 5, wherein the amine-based antioxidant is 4,4'-α,α-dimethylbenzyldiphenylamine, the phosphorus-based antioxidant is tris(nonylphenyl) phosphite or triisodecyl phosphite, and the sulfur-based antioxidant is dilauryl thiodipropionate.

7. The tire bladder according to any one of Claims 1 to 6,
wherein the monoalkyl maleate- and/or monoalkoxyalkyl maleate-derived structural unit is at least one compound selected from monoethyl maleate, monobutyl maleate, monocyclohexyl maleate, monoethoxyethyl maleate, and monomethoxybutyl maleate.

8. The tire bladder according to any one of Claims 1 to 7,
wherein the alkyl acrylate -derived structural unit consists of 50 to 100 mass % of methyl acrylate or ethyl acrylate, and 0 to 50 mass % of n-butyl acrylate.

## Patentansprüche

1. Reifenheizbalg aus einer Acrylkautschukzusammensetzung, mindestens umfassend:
100 Masseteile eines Acrylkautschuks, enthaltend 94,5 bis 99,5 Masse-% einer von einem Alkyl(meth)acrylat abgeleiteten Struktureinheit und 0,5 bis 3 Masse-% einer von einem Monoalkylmaleat und/oder einem Monoalkoxyalkylmaleat abgeleiteten Struktureinheit;
30 bis 200 Masseteile eines Rußes mit einem arithmetischen mittleren Teilchendurchmesser, bestimmt gemäß JIS-Z8901, von 20 bis 30 nm und einer DBP-Ölabsorption von 70 bis 130 ml/100 g;
0,1 bis 5 Masseteile einer Imidazolverbindung als Antioxidans; und
0,1 bis 10 Masseteile eines Vulkanisationsmittels, wobei das Vulkanisationsmittel mindestens eine Verbindung, ausgewählt aus Bis[4-(4-aminophenoxy)phenyl]sulfon, Bis[4-(3-aminophenoxy)phenyl]sulfon, 9,9-Bis(4-aminophenyl)fluoren und 4,4'-Bis(4-aminophenoxy)biphenyl, ist.

2. Reifenheizbalg nach Anspruch 1, wobei das Antioxidans mindestens eine Verbindung, ausgewählt aus 2-Mercaptobenzimidazol, 2-Mercaptomethylbenzimidazol und 4,5-Mercaptomethylbenzimidazol, ist.

3. Reifenheizbalg aus einem Acrylkautschuk nach Anspruch 1 oder 2, wobei der Acrylkautschuk zusätzlich eine von Ethylen abgeleitete Struktureinheit in einer Menge von 2,5 Masse-% oder weniger enthält.

4. Reifenheizbalg nach einem der Ansprüche 1 bis 3, wobei die Acrylkautschukzusammensetzung weiterhin eine Verbindung auf Guanidinbasis als Vulkanisationsbeschleuniger in einer Menge von 0,1 bis 5 Masseteilen in Bezug auf 100 Masseteile des Acrylkautschuks umfasst.

5. Reifenheizbalg nach einem der Ansprüche 1 bis 4, wobei die Acrylkautschukzusammensetzung weiterhin mindestens ein zusätzliches Antioxidans, ausgewählt aus Antioxidantien auf Amin-, Phosphor- und Schwefelbasis, in einer Menge von 0,1 bis 10 Masseteilen, beigemischt in Bezug auf 100 Masseteile des Acrylkautschuks, umfasst.

6. Reifenheizbalg nach Anspruch 5, wobei das Antioxidans auf Aminbasis 4,4'-α,α-Dimethylbenzyldiphenylamin ist, das Antioxidans auf Phosphorbasis Tris(nonylphenyl)phosphit oder Triisodecylphosphit ist und das Antioxidans auf Schwefelbasis Dilaurylthiodipropionat ist.

7. Reifenheizbalg nach einem der Ansprüche 1 bis 6, wobei die von einem Monoalkylmaleat und/oder einem Monoalkoxyalkylmaleat abgeleitete Struktureinheit mindestens eine Verbindung, ausgewählt aus Monoethylmaleat, Monobutylmaleat, Monocyclohexylmaleat, Monoethoxyethylmaleat und Monomethoxybutylmaleat, ist.

8. Reifenheizbalg nach einem der Ansprüche 1 bis 7, wobei die von einem Alkylacrylat abgeleitete Struktureinheit aus 50 bis 100 Masse-% Methylacrylat oder Ethylacrylat und 0 bis 50 Masse-% n-Butylacrylat besteht.

## Revendications

1. Vessie de pneu d'une composition de caoutchouc acrylique comprenant au moins :
100 parties en masse d'un caoutchouc acrylique contenant de 94,5 à 99,5 % massique d'une unité structurelle dérivée d'un (méth)acrylate d'alkyle et de 0,5 à 3 % massique d'une unité structurelle dérivée d'un maléate de monoalkyle et/ou d'un maléate de monoalkoxyalkyle ;
de 30 à 200 parties en masse d'un noir de carbone ayant un diamètre de particule de moyenne arithmétique de 20 à 30 nm, tel que déterminé conformément à JIS-Z8901, et une absorption d'huile DBP de 70 à 130 ml/100 g ;
de 0,1 à 5 parties en masse d'un composé imidazole comme antioxydant ; et
de 0,1 à 10 parties par masse d'un agent vulcanisant, l'agent vulcanisant étant au moins un composé sélectionné parmi le groupe se composant de bis[4-(4-aminophénoxy)phényl]sulfone, bis[4-(3-amino-phénoxy)phényl]sulfone, 9,9-bis(4-aminophényl)fluorène et 4,4'-bis(4-aminophénoxy)biphényle.

2. Vessie de pneu selon la revendication 1, l'antioxydant étant au moins un composé sélectionné parmi le groupe se composant de 2-mercaptobenzimidazole, 2-mercaptométhylbenzimidazole et 4,5-mercaptométhylbenzimidazole.

3. Vessie de pneu d'un caoutchouc acrylique selon la revendication 1 ou 2, le caoutchouc acrylique contenant de plus une unité structurelle dérivée de l'éthylène, à une teneur de 2,5 % massique ou moins.

4. Vessie de pneu selon l'une quelconque des revendications 1 à 3, la composition de caoutchouc acrylique comprenant en outre un composé à base de guanidine comme accélérateur de vulcanisation à une teneur de 0,1 à 5 parties en masse, relativement à 100 parties en masse du caoutchouc acrylique.

5. Vessie de pneu selon l'une quelconque des revendications 1 à 4, la composition de caoutchouc acrylique comprenant en outre au moins un antioxydant sélectionné parmi des antioxydants à base d'amine, de phosphore et de soufre à une teneur de 0,1 à 10 parties en masse, mélangé relativement à 100 parties en masse du caoutchouc acrylique.

6. Vessie de pneu selon la revendication 5, l'antioxydant à base d'amine étant de la 4,4'-α,α-diméthylbenzyldiphénylamine, l'antioxydant à base de phosphore étant du phosphite de tris(nonylphényl) ou du phosphite de triisodécyle, et l'antioxydant à base de soufre étant du dilauryl thiodipropionate.

7. Vessie de pneu selon l'une quelconque des revendications 1 à 6, l'unité structurelle dérivée de maléate de monoalkyle et/ou de maléate de monoalkoxyalkyle étant au moins un composé sélectionné parmi le groupe se composant de maléate de monoéthyle, maléate de monobutyle, maléate de monocyclohexyle, maléate de monoéthoxyéthyle et maléate de monométhoxybutyle.

8. Vessie de pneu selon l'une quelconque des revendications 1 à 7, l'unité structurelle dérivée de l'acrylate d'alkyle se composant de 50 à 100 % massique d'acrylate de méthyle ou d'acrylate d'éthyle, et de 0 à 50 % massique d'acrylate de n-butyle.
